# FASCICULE DE BREVET EUROPEEN

(11) **EP 1 050 018 B1**
(45) Date de publication et mention de la délivrance du brevet: **16.10.2002**
(21) Numéro de dépôt: 99900916.0
(22) Date de dépôt: 14.01.1999
(51) Int. Cl.: G06K 19/077

(54) **CARTE A CIRCUIT(S) INTEGRE(S) A CONTACT, COMPORTANT UNE MINICARTE DETACHABLE**
KONTAKT-CHIPKARTE MIT HERAUSNEHMBARER MINIKARTE
INTEGRATED CIRCUIT CONTACT CARD, COMPRISING A DETACHABLE MINICARD

(30) Priorité: 22.01.1998 FR 9801370
(43) Date de publication de la demande: 08.11.2000
(73) Titulaire: Gemplus, 13881 Gémenos Cedex (FR)
(72) Inventeur: HOUSSE, Nicolas, F-83640 Saint Zacharie (FR); FIDALGO, Jean, Christophe, F-13420 Gémenos (FR)
(86) Numéro de dépôt international: FR9900052
(87) Numéro de publication internationale: WO99038118

(56) Documents cités:
- EP-A- 0 521 778
- EP-A- 0 638 873

## Description

L'invention concerne une carte normalisée à circuit(s) intégré(s) à contact, aussi appelée couramment carte à puce.

L'invention concerne plus particulièrement une carte à puce normalisée transformable de manière irréversible en une minicarte normalisée à puce.

L'invention concerne ainsi une carte normalisée à circuit(s) intégré(s) à contact comportant un support en forme de plaque rectangulaire délimité par deux grands bords longitudinaux et par deux petits bords transversaux avant et arrière. Elle porte au moins un microcircuit électronique dont le recto comporte une série de plages de contact, agencée au voisinage du bord transversal avant de la carte, pour le raccordement électrique du microcircuit à un circuit d'exploitation appartenant à un dispositif comportant par exemple un connecteur dans lequel la carte est mise en place de manière que ses plages de contact coopèrent avec des lames de contact du connecteur. La carte comporte une fente de contour sensiblement rectangulaire formée dans le support, autour d'une portion comportant le microcircuit et la série de plages de contact, pour délimiter une minicarte normalisée détachable qui est reliée au support de la carte par plusieurs bretelles, réalisées venues de matière avec le support, qui s'étendent entre les bords intérieurs de la découpe formée par la fente dans la carte et les bords en vis-à-vis de la minicarte qui sont globalement parallèles aux bords de la carte.

Selon le document EP-A-0.638.873 ou le document EP-B1-0.521.778, il est possible de transformer simplement la carte, ou grande carte dite carte SIM, dont le format est conforme aux normes internationales GSM 11.11 et ISO 7816, en une minicarte SIM normalisée, dont les dimensions sont également définies par la norme internationale GSM 11.11, en détachant cette dernière de la carte par rupture des bretelles ou ponts de liaison, cette rupture pouvant être effectuée notamment manuellement en enfonçant globalement la minicarte selon une direction verticale perpendiculaire au plan général de la carte.

Cette conception connue permet de livrer la carte «complète» à un utilisateur, c'est à dire sans détacher la minicarte, pour lui permettre d'utiliser la puce avec une carte selon l'un ou l'autre des deux formats (carte ou minicarte) en fonction de l'appareil récepteur dans laquelle il doit introduire la carte.

Chacune des deux cartes doit notamment pouvoir. satisfaire selon la norme ISO à des tests de résistance mécanique comportant notamment des cycles répétés de flexion /torsion, sans qu'il y ait de dégradation' visuelle ou fonctionnelle de la puce, du module incorporant la puce et encarté dans le support de la carte, ou du corps en matériau plastique de la carte formant le support proprement dit.

Ces contraintes mécaniques doivent notamment être supportées par la grande carte, ainsi bien entendu que par la minicarte.

Pour des raisons pratiques; il est souhaitable que la minicarte puisse être détachée aisément du corps de la grande carte par une opération manuelle, sans l'aide d'un outillage spécifique et sans nuire au fonctionnement et à la fiabilité ultérieure de la minicarte ainsi obtenue.

II est souhaitable d'améliorer la structure de la carte pour notamment faciliter encore plus la séparation manuelle, tout en garantissant une tenue en flexion/torsion selon la norme ISO.

Il est par exemple prévu l'utilisation de puce ou module plus fragiles à l'avenir et dans ce cas, il est préférable de ne pas avoir de risques mêmes négligeables d'endommagement de la puce ou du module.

En outre, l'une ou l'autre des deux cartes doit pouvoir être utilisée sans présenter de problèmes d'insertion ou d'extraction de la carte dans son dispositif récepteur, et notamment dans le connecteur, plus. particulièrement lorsqu'une carte est introduite dans le connecteur selon une direction sensiblement parallèle à son plan général avec son bord transversal d'introduction correspondant, dans le cas de la grande carte, à son bord transversal avant adjacent aux plages de contact de raccordement de la puce et, dans le cas de la minicarte, à l'un ou l'autre de ses deux bords transversaux parallèles et opposés.

Il est aussi souhaitable que, notamment lorsque la carte de grand format est utilisée, que la fente de découpe, et/ou des rainures complémentaires constituant des amorces de rupture des bretelles de liaison, n'endommagent pas les lames élastiques de contact du connecteur du fait de leur passage répété en regard des extrémités libres de contact des lames de contact du connecteur lors des opérations répétées d'introduction et d'extraction de la carte.

Afin de remédier aux inconvénients qui viennent d'être mentionnés et de satisfaire aux différents impératifs de fiabilité des cartes et des connecteurs, l'invention propose une carte selon les revendications.

D'autres caractéristiques' et avantages de l'invention apparaîtront à la lecture de la description détaillée qui suit. pour la compréhension de laquelle on se reportera aux dessins annexés dans lesquels :
- la figure 1 est une vue en plan de dessus d'une carte conforme aux enseignements de l'invention ;
- la figure 2 est une vue similaire à celle de la figure 1 sur laquelle on a représenté à plus grande échelle la partie de la carte comportant la minicarte ;
- les figures 3 et 4 sont des vues en section selon les lignes 3-3 et 4-4 de la figure 2 ;
- la figure 5 est une vue à plus grande échelle du détail D5 de la figure 3 ;
- la figuré 6 est une vue partielle en section selon la ligne 6-6 de la figure 5 ;
- la figure 7 est une vue à plus grande échelle du détail D7 de la figure 4 ; et
- la figure 8 est une vue partielle en section selon la ligne 8-8 de la figure 7.
- la figure 9 est une vue en plan de dessus d'une autre carte conforme aux enseignements de l'invention;
- la figure 10 est une vue partielle en section selon la ligne 10-10 de la figure 9;
- la figure. 11 est une vue en plan de dessus d'une autre carte conforme aux enseignements de l'invention;
- la figure 12 est une vue partielle en section selon la ligne12-12 de la figure 11;

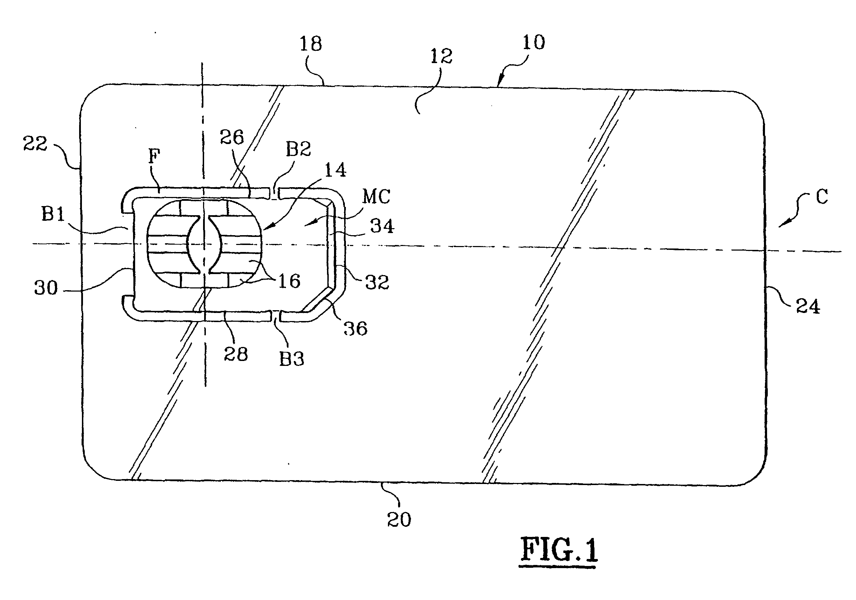

On a représenté sur la figure 1 une carte normalisée C, de conception générale connue, qui est une carte à puce constituée pour l'essentiel par un corps 10. en forme de plaque rectangulaire à coins arrondis qui est généralement en matière plastique et qui incorpore un microcircuit électronique (non représenté) qui est associé au support 10 selon l'une quelconque des techniques connues, par exemple sous la forme d'un module encarté dans le support 10.

La face 12 de là carte C visible sur la figure 1 est le recto de la carte qui comporte une zone 14 dans laquelle sont agencées six plages 16, ou plots, de raccordement électrique du microcircuit électronique à un circuit d'exploitation par l'intermédiaire d'un connecteur électrique (non représenté) appartenant par exemple à un dispositif de lecture-écriture.

Les plages 16 sont disposées selon une conception normalisée et elles s'étendent globalement parallèlement les unes aux autres et alignées deux à deux selon la direction générale longitudinale de la carte, c'est-à-dire selon la direction parallèle aux deux bords longitudinaux parallèles et opposés 18 et 20 du support 10.

Conformément à la norme, la zone 14 comportant la série de plages 16 est agencée à proximité d'un bord transversal 22 du support 10 qui est appelé ici bord transversal avant en référence au sens habituel d'introduction de la carte C, d'arrière en avant, dans un connecteur.

Le support 10 est aussi délimité par un bord transversal arrière opposé 24 parallèle au bord transversal avant 22 et perpendiculaire aux deux bords longitudinaux 18 et 20.

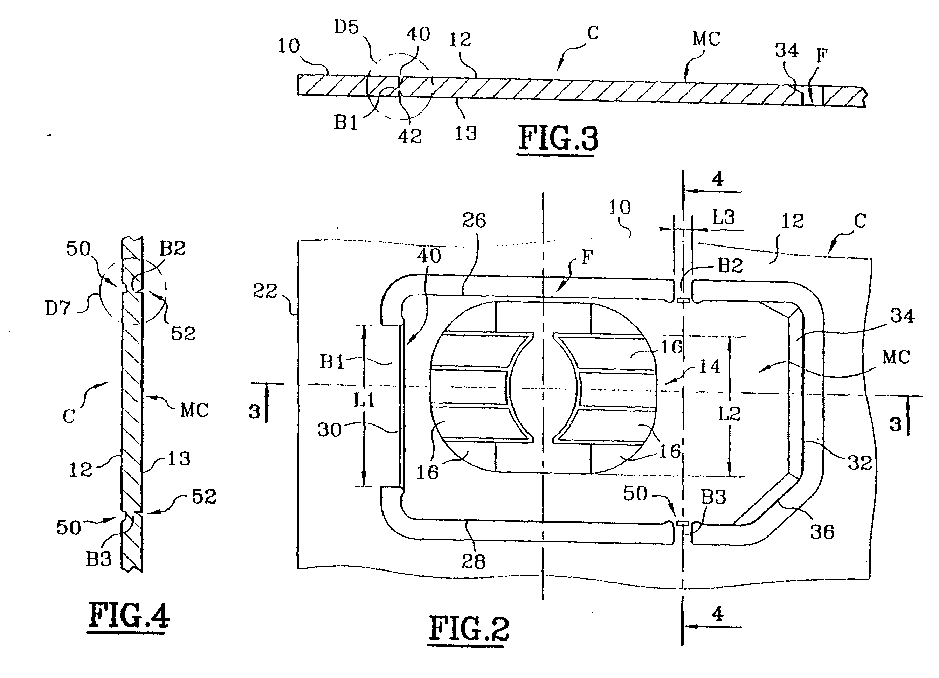

L'autre face 13 formant verso de la carte (voir figure 3) est parallèle à la face de recto 12, ces deux faces déterminant l'épaisseur normalisée de la carte C qui est comprise entre 0,68 et 0,84 mm et, de préférence, entre 0,80 et 0,84 mm.

Selon une conception connue, le support 10 comporte une fente F de contour sensiblement rectangulaire et qui s'étend globalement autour d'une portion du corps 10 de la carte C qui comporte le microcircuit électronique et la zone 14 comportant la série de plages de raccordement électrique 16.

La fente F délimite ainsi intérieurement une minicarte normalisée MC, de contour sensiblement rectangulaire, qui est délimitéepar deux bords longitudinaux parallèles et opposés 26 et 28 qui sont respectivement parallèles et adjacents aux bords longitudinaux 18 et 20 de la carte C.

La minicarte MC est aussi délimitée par un premier bord transversal 30, appelé ici bord transversal avant, qui est parallèle et adjacent au bord transversal avant 22 de la carte C.

Enfin, la minicarte MC est aussi délimitée par un autre bord transversal arrière 32 opposé et parallèle au bord transversal avant 30, qui est un bord comportant un chanfrein 34 formé dans le recto 12 du support 10 et qui est relié au bord longitudinal 28 par un pan coupé 36, de forme et de dimensions normalisées, pour constituer un moyen de détrompage du sens d'introduction ou de mise en place de la minicarte MC dans un connecteur.

Le chanfrein a pour fonction d'éviter un éventuel accrochage de la minicarte contre les organes d'un mobile téléphonique, lors de son retrait de celui-ci. En effet, certains mobiles disposent de moyens élastiques qui ont tendance à plaquer la minicarte contre le connecteur et à lever l'extrémité 32 de la minicarte hors du plan général de la carte. Le chanfrein peut être réalisé par compression de la matière de la carte à l'aide d'un outillage approprié.

La fente F peut être réalisée selon une technique connue, en faisant par exemple appel à un outil de découpe/poinçon et à une matrice complémentaire, ou en la réalisant par découpage au moyen d'un jet d'eau sous pression ou d'un faisceau laser.

La découpe de la fente F est incomplète, c'est-à-dire que, selon une conception générale connue, on laisse subsister des bretelles ou ponts qui relient la minicarte MC au corps 10 de la carte C afin de constituer un ensemble « bi-standards » permettant à l'utilisateur final d'utiliser la carte C de grand format ou la minicarte MC, en fonction de l'application, une telle faculté étant notamment nécessaire lorsque la carte contient des données relatives à un abonnement à un réseau de communication téléphonique auquel on se relie par des combinés portables qui, en fonction des fabricants font appel aux deux types de cartes.

Les bretelles de liaison sont réalisées venues de matière, c'est-à-dire qu'elles sont constituées par des portions du support 10 qui ne sont pas découpées lors de la réalisation de la fente F.

Conformément aux enseignements de l'invention, les bretelles de liaison sont au nombre de trois et sont réparties selon un agencement qui sera maintenant décrit plus en détail, notamment en référence à la figure 2.

La première bretelle B1 s'étend longitudinalement, vers la gauche en considérant la figure 2, à partir du bord transversal avant 30 de la minicarte MC qui est adjacent à la zone 14 et ceci en direction du bord transversal avant 22 de la carte C.

Conformément aux enseignements de l'invention, la première bretelle B1 est une bretelle de grande largeur L1, par exemple égale à environ 11 mm, qui est supérieure à la largeur L2 représentative de la largeur et du passage des lames de contact d'un connecteur par rapport à la zone 14 portant les plages de raccordement électrique 16. De plus la bretelle B1 s'étend au moins en regard de cette zone de manière qu'il n'y ait aucune portion de fente F entre le bord transversal avant 22 de la carte C et la zone 14 pour éviter d'endommager les contacts d'un connecteur par le passage d'une portion de fente F sur les extrémités libres du contact du connecteur.

De plus, la première bretelle B1 de grande largeur L1 confère des propriétés mécaniques à la carte C et à la minicarte MC leur permettant de résister en association avec les autres bretelles aux efforts de torsion et de flexion mentionnés précédemment.

Les deux autres bretelles de liaison de la minicarte MC à la carte C sont, dans le mode de réalisation illustré sur les figures, deux bretelles identiques et opposées B2 et B3.

La première bretelle B2 s'étend transversalement à partir du bord longitudinal 26 de la minicarte MC en direction du bord longitudinal 18 de la carte C.

De la même manière, la troisième bretelle B3 s'étend transversalement à partir du bord longitudinal 28 de la minicarte MC en direction du bord longitudinal 20 de la carte C.

Les deuxième et troisième bretelles B2 et B3 sont alignées selon une même direction transversale et elles sont situées à proximité de la zone 14, c'est-à-dire que leur axe transversal moyen, correspondant à la ligne de coupe 4-4 de la figure 2, est situé à une distance du bord transversal avant 30 de la minicarte MC sensiblement égale à 17 mm.

Conformément aux enseignements de l'invention, il n'existe aucune autre bretelle de liaison, et il n'y a notamment pas de bretelle de liaison s'étendant depuis le bord transversal arrière 32 de la minicarte MC pour le relier au support 10 de la carte C, ce qui est particulièrement avantageux dans la mesure où ce bord constitue souvent le bord d'introduction de la minicarte dans un connecteur qui ne comporte ainsi aucune bavure risquant de nuire à un bon positionnement de la minicarte par rapport au connecteur et risquant d'endommager les lames de contact de ce dernier.

Comme on peut le voir notamment sur la figure 2, les deuxième et troisième bretelles B2 et B3 sont des bretelles de largeur réduite L3 qui est par exemple égale à environ 1,2 mm.

Dans l'exemple illustré sur les figures, les trois bretelles B1 à B3 sont des bretelles délimitées chacune par deux bords parallèles et opposés, d'orientation longitudinale dans le cas de la première bretelle B1, et d'orientation transversale dans le cas des deuxième et troisième bretelles B2 et B3.

Selon un autre aspect de l'invention, il est prévu des moyens pour faciliter la rupture par opération manuelle des bretelles de liaison en vue de détacher la minicarte MC de la carte C.

Conformément à l'invention, les moyens constituant des amorces de rupture des bretelles de liaison sont des rainures de profils et de dimensions particuliers.

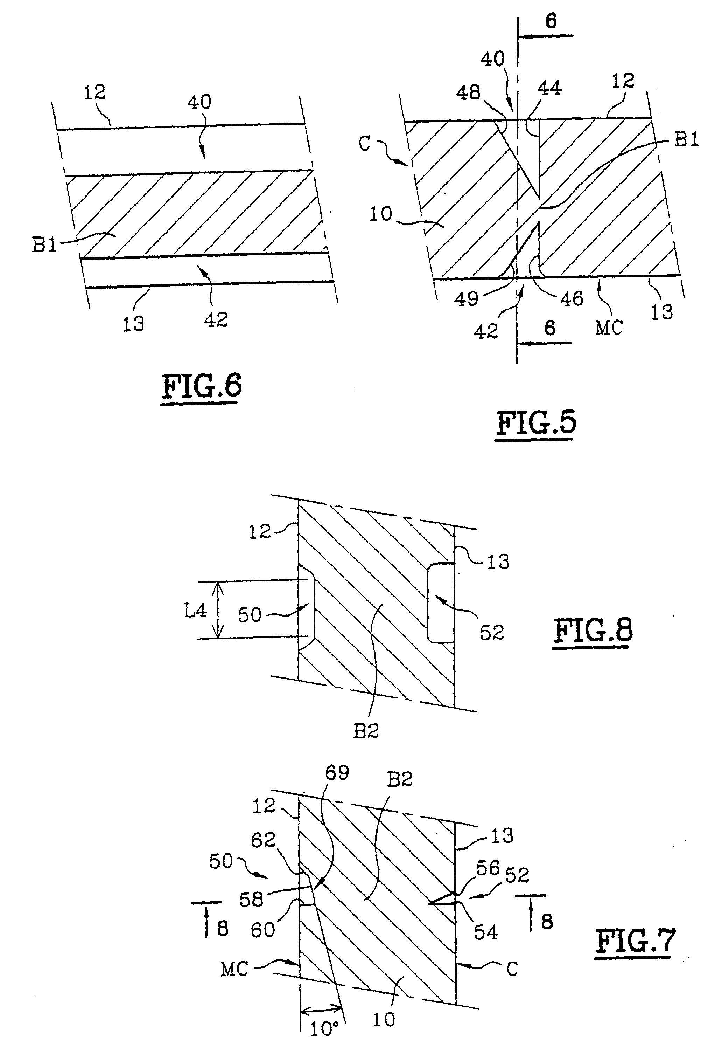

En ce qui concerne la première bretelle B1, le recto 12 et le verso 13 de la bretelle comportent chacun une rainure 40, 42 qui sont opposées et alignées et dont chacune est conformée en section, comme on peut le voir notamment aux figures 3 et 5, avec un profil sensiblement en forme V.

Plus particulièrement, chaque rainure 40, 42 comporte une branche ou bord vertical 44, 46 qui s'étend verticalement perpendiculaire au plan du recto 12, verso 13 tandis que les autres bords ou branches 48 et 49 sont inclinés en direction de la carte C, en formant un angle aigu avec le bord 44, 46 par exemple égal à environ 30°. Les profondeurs des rainures 40 et 42 sont de préférence égales mais elles peuvent être différentes et par exemple égales respectivement à 0,42 et 0,30 mm dans le cas d'une carte de 0,82 mm d'épaisseur. De préférence, la pointe de la rainure est cassée par un plat de largeur égale à environ 0,02 mm ou de manière sensiblement équivalente par un arrondi de rayon de courbure égal à environ 0,01 mm. La section résiduelle entre les rainures dépend de l'épaisseur de la carte et de la nature du matériau constitutif du support. Les valeurs ci-dessus sont données pour une carte en ABS ou en ABS - HR (haute température) injecté et correspondent à une section résiduelle égale à environ 0, 10 mm. Ces valeurs seraient toutefois sensiblement valables pour des cartes obtenues en une autre matière injectée et aux propriétés mécaniques similaires.

Les rainures sont réalisées par marquage au moyen d'un poinçon (non représenté sur les figures) dont La profondeur d'enfoncement détermine la profondeur des rainures.

Comme on peut le voir notamment à la figure 2, les rainures formant amorce de rupture 40 et 42 s'étendent sur toute la largeur L1 de la bretelle B1.

On décrira maintenant les rainures formant amorce de rupture pour les deuxième et troisième bretelles B2 et B3.

Dans l'exemple illustré sur les figures, les rainures 50 formées dans le recto 12 des bretelles B2 et B3 ne sont pas identiques aux rainures 52 formées dans le verso 13. Elles sont par contre identiques deux à deux, c'est-à-dire que les deux rainures 50 formées dans le recto 12 sont identiques, de même que les deux rainures 52 formées dans le verso 13.

Comme on peut le voir notamment sur la figure 2, la largeur des rainures 50 est inférieure à la largeur totale L3 des première et deuxième bretelles B2 et B3. Il en est de même de la largeur des rainures 52.

Les rainures 52 formant amorce de rupture qui sont formées dans le verso 13 sont de conception similaire à celle des rainures 40 et 42 formées dans la première bretelle B1, c'est-à-dire que chacune présente un profil sensiblement en forme de V avec un bord 54 perpendiculaire au plan général de la carte C et un bord incliné 56. L'angle du V est ici par exemple de 25° et la profondeur des rainures 52 est de 0,10mm. Les rainures comportent de préférence un angle arrondi à leur extrémité (à la pointe du V). Grâce à cet arrondi, on limite le déclenchement et la propagation de fissures au cours des tests de flexion torsion conformes à la norme ISO précitée. Cet arrondi présente dans l'exemple notamment un rayon de courbure de l'ordre de 0,01 mm.

Par contre, la rainure est suffisamment profilée de manière à permettre une amorce de rupture par une pression manuelle volontaire agissant sur la minicarte en allant notamment du recto au verso

Les rainures 50 présentent un profil différent sensiblement en forme de trapèze illustré notamment à la figure 7.

Ainsi, chaque rainure 50 est délimitée par un fond 58 légèrement incliné par rapport au recto 12 et au plan général de la carte C, par exemple d'un angle de 10°, qui correspond à la petite base 58 du trapèze, ce dernier étant par ailleurs délimité par un grand côté 60, aligné avec le bord 54 de la rainure 52 en vis-à-vis, qui s'étend perpendiculairement au plan du recto 12 et au plan général de la grande carte et, d'autre part, par un petit côté 62 qui est incliné, le premier côté 60 étant adjacent à la minicarte MC tandis que le côté incliné (où plutôt légèrement arrondi) 62 s'étend en direction du corps de la carte C. Les côtés 60 et 62 sont raccordés au fond 58 par des congés d'environ 0,05 mm de rayon. Comme on peut le voir à la figure 8, les rainures 52 et 50 présentent une largeur L4 qui est par exemple égale à 0,40 mm tandis que la largeur L3 des bretelles B2 et B3 est égale à environ 1, 2 mm. La largeur de la rainure 50 est quant à elle égale à environ 0,22 mm.

Cette rainure est conformée de manière à résister aux efforts de flexion/torsion imposée à la norme ISO précitée et ce de manière plus importante que la rainure 52. En effet, sa forme arrondie et ouverte est plus résistante au déclenchement d'une fissure que celle de la rainure 52 qui présente une forme aiguë et se termine par un petit rayon de courbure égal par exemple 0,01 mm, par opposition à la rainure 50 dont l'extrémité la plus profonde présente par exemple un rayon de courbure plus grand de 0,05 mm.

La présence d'un rayon de courbure à l'extrémité de la rainure 52 est particulièrement justifiée pour atténuer la tendance de cette rainure au déclenchement d'une fissure au cours des tests de flexion/ torsion.

Une légère inclinaison du fond 58 de la rainure 50, par exemple de 10 degrés, crée une zone située au plus près de l'extrémité de la rainure 52. On obtient ainsi une zone 69 d'amorce ou d'arrivée d'une fissure, facilitant la cassure de la bretelle le long d'une ligne joignant les bords 60 et 54.

De même, on observe sur la figure 8 que la rainure 50 est plus évasée que la rainure 52, ceci toujours dans le but d'être moins sensible à une amorce d'une fissure par rapport à la rainure 52

Ainsi, selon l'invention la carte comporte des bretelles de liaison de la minicarte à la grande carte de forme particulière, chaque bretelle comportant deux types de rainures en regard l'une de l'autre conformées de manière à être suffisamment résistantes aux efforts de flexion/torsion selon la norme ISO, l'une des rainures étant cependant également conformée de manière plus facilement à amorcer une fissure par pression manuelle volontaire sur la minicarte. Ainsi, on contrôle en cas de besoin la réalisation manuelle de la cassure au plus près de la minicarte en respectant le contour normalisée de la minicarte.

Le cas échéant, il est possible d'avoir une seule bretelle de ce type reliant la minicarte à la grande carte et dimensionnée de manière à remplir la fonction mécanique de plusieurs bretelles.

Dans le cas où l'extraction de la minicarte n'est pas souhaitée, on peut disposer d'une carte grand format conforme. à la norme ISO tant sur les dimensions que sur les propriétés de résistance mécanique.

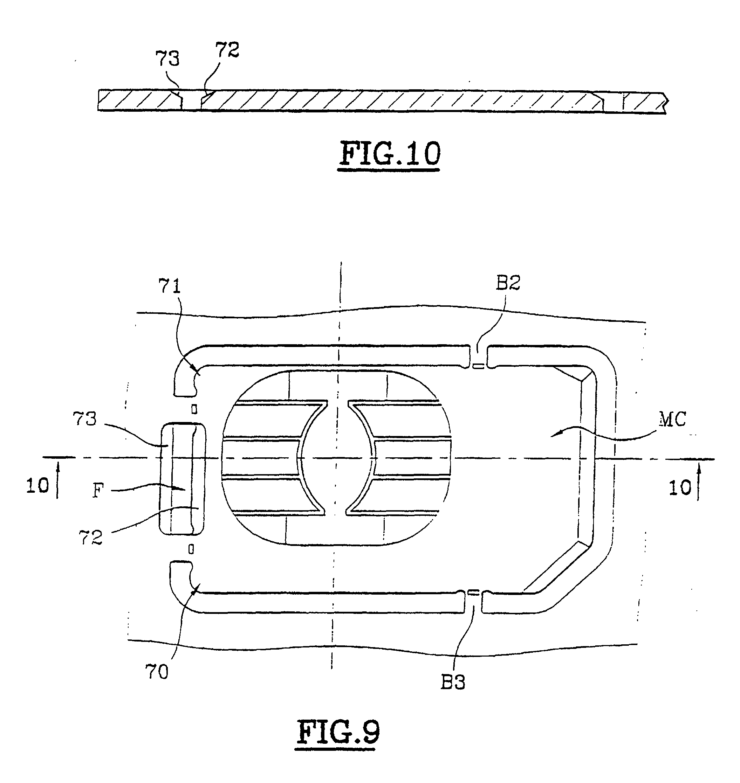

Conformément à un autre mode de réalisation illustré à la figure 9, on réalise la bretelle B1 en deux bretelles B4, B5 espacées situées notamment à proximité des angles.70, 71 de la minicarte. Ces bretelles peuvent comporter des rainures dont la section est sensiblement conforme à celle de la bretelle B1 (figure. 5).

L'avantage d'une construction à deux bretelles est de permettre de conserver la minicarte sensiblement dans un plan malgré une courbure de la carte dans sa largeur. On évite ainsi une probable tendance de la bretelle B1 à avoir une amorce de fissure à partir des angles 70, 71.

Il est toutefois préféré d'avoir des bretelles B4, B5 conformes aux bretelles B2, B3 pour augmenter la résistance à des efforts de flexion/torsion.

Alternativement, pour avoir le moins de déformation sur la minicarte, il peut être envisagé d'avoir une seule bretelle de structure sensiblement conforme notamment à celle de B1 mais moins large, et centré sur la médiane longitudinale de la minicarte. De préférence, cette bretelle centrale peut être conforme à B4, B5 est dimensionnée de manière à remplir la fonction escomptée..

La fonction supplémentaire de la bretelle B1 qui est de faciliter le passage de lames élastiques de connecteur peut être réalisée de deux autres manières différentes.

La première est illustrée aux figures 9 et 10, par des chanfreins qui atténuent la discontinuité provoquée par la fente F. Les chanfreins sont prévus au niveau du passage de ces lames élastiques en cas de discontinuité importante. Dans l'exemple, il est prévu un chanfrein (72, 73) respectivement de chaque côté de la fente F.

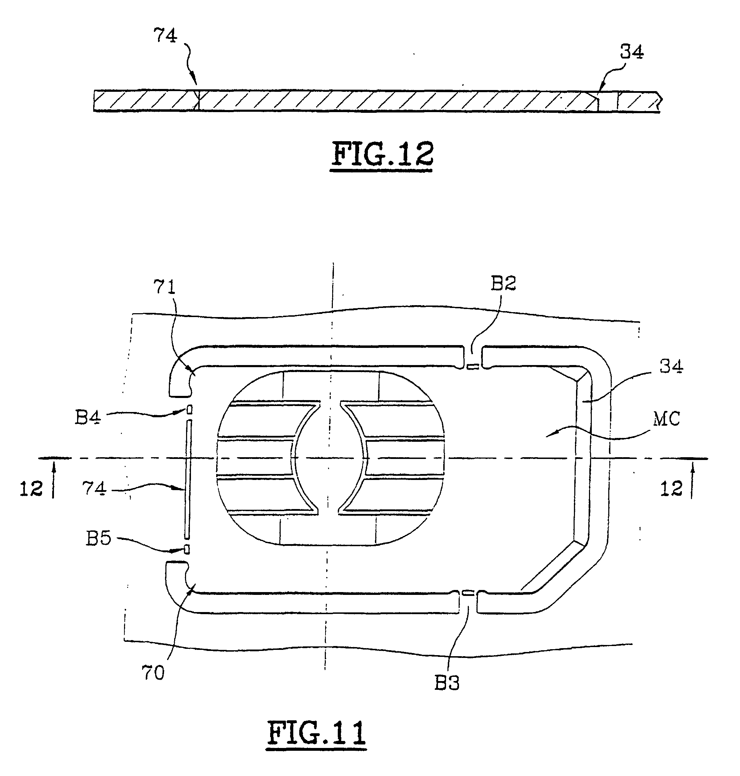

En variante, la fonction ci-dessus est réalisée conformément aux figures 11 et 12. Entre les deux bretelles B4, B5 il y a une fente 74 traversant la carte équivalente à la fente F mais plus étroite. Elle peut résulter d'une opération de cisaillement effectuée par des lames ou par poinçon/matrice.

En variante également, la fente F peut être réalisée conformément à l'entaille 74 de la figure 12 sur tout le contour de la minicarte à l'exception des bretelles.

L'invention n'est pas limitée au mode de réalisation qui viennent d'être décrits.

Sans sortir du cadre de l'invention, mais tout en consèrvant le principe de l'invention, il est bien entendu possible de modifier légèrement les dimensions, la position et le nombre des différentes bretelles ainsi que les profils et dimensions des rainures.

## Revendications

1. Carte normalisée (C) à circuit(s) intégré(s) à contact comportant un support (10) délimité par deux grands bords longitudinaux (18, 20) et par deux petits bords transversaux avant (22) et arrière (24), qui porte au moins un microcircuit électronique et dont le recto (12) comporte une série (14) de plages de contact (16), agencée au voisinage du bord transversal avant (22) de la carte (C), et comportant une fente (F) de contour sensiblement rectangulaire formée dans le support (10), autour d'une portion comportant le microcircuit et la sérié (14) de plages de contact (16), pour délimiter une minicarte (MC) normalisée détachable qui est reliée au support (10) de la carte (C) par une ou plusieurs bretelles (B1, B2, B3), qui s'étendent entre les bords intérieurs de la découpe et les bords en vis-à-vis (26, 28, 30, 32),
**caractérisée en ce qu'**au moins une bretelle comporte deux types de rainures (50, 52) en regard l'une de l'autre, l'une (50) étant conformée de manière à résister au déclenchement de fissures au cours d'efforts de flexion/torsion selon la norme ISO et ce de manière plus importante que l'autre rainure (52), cette dernière étant cependant également conformée de manière à amorcer une fissure par pression manuelle volontaire sur la minicarte.

2. Carte selon la revendication 1, **caractérisée en ce qu'**elle comporte trois bretelles (B1, B2, B3) de liaison parmi lesquelles une première bretelle (B1) qui s'étend longitudinalement depuis le bord transversal avant (30) de la minicarte (MC) adjacent au bord transversal avant (22) de la carte (C), dont la largeur (L1) est au moins égale à la largeur (L2) de la série (14) des plages de contact (16) agencée au voisinage du bord transversal avant (30) de la minicarte (MC), et des deuxième (B2) et troisième (B3) bretelles opposées qui s'étendent chacune transversalement à partir d'un bord longitudinal (26, 28) de la minicarte (MC).

3. Carte selon l'une des revendications précédentes, **caractérisée en ce que** les deuxième (B2) et troisième (B3) bretelles sont alignées transversalement et sont situées à proximité de la série (14) des plages de contact (16).

4. Carte selon l'une des revendications précédentes, **caractérisée en ce que** les deuxième (B2) et troisième (B3) bretelles alignées sont situées à environ 17 mm dudit bord transversal avant (30) de la minicarte (MC) à partir duquel s'étend la première bretelle (B1).

5. Carte selon l'une quelconque des revendications précédentes, **caractérisée en ce que** la largeur (L1) de la première (B1) bretelle est égale à environ 11 mm.

6. Carte selon l'une quelconque des revendications précédentes, **caractérisée en ce que** la largeur (L3) des deuxième (B2) et troisième (B3) bretelles est égale à environ 1, 2 mm.

7. Carte selon l'une quelconque des revendications précédentes, **caractérisée en ce que** chacune des bretelles (B1, B2, B3) comporte, au moins sur son recto (12) ou son verso (13), une rainure (40, 42, 50, 52) parallèle au bord de la minicarte (MC) à partir duquel la bretelle s'étend de manière à constituer une portion d'épaisseur réduite constituant une amorce de rupture de la bretelle.

8. Carte selon la revendication précédente, **caractérisée en ce que** la première bretelle (B1) comporte, au moins sur son recto (12) ou son verso (13), une rainure (40, 42) qui, en section, présente un profil en V dont une branche (44, 46) adjacente au bord (30) de la minicarte (MC) s'étend perpendiculairement au plan général de la carte (C).

9. Carte selon la revendication précédente, **caractérisée en ce que** la première bretelle (B1) comporte deux rainures (40, 42) opposées identiques et alignées formées dans le recto (12) et le verso (13).

10. Carte selon l'une quelconque des revendications 7 à 9, **caractérisée en ce que** chacune des deuxième, (B2) et troisième (B3) bretelles comporte, au moins sur son recto ou son verso, une rainure (52) qui, en section, présente un profil en V dont une branche (54) adjacente au bord (28, 26) de la minicarte (MC) s'étend perpendiculairement au plan général de la carte (C).

11. Carte selon l'une quelconque des revendications 7 à 9, **caractérisée en ce que** chacune des deuxième (B2) et troisième (B3) bretelles comporte, au moins sur son recto ou son verso, une rainure (50) qui, en section, présente un profil sensiblement en forme de trapèze dont un côté (60) adjacent au bord (28, 26) de la minicarte (MC) s'étend perpendiculairement au plan général de la carte (C) et dont la petite base (58) appartenant au fond de la rainure s'étend avec une inclinaison par rapport au plan général de la carte (C).

12. Carte selon la revendication 11 prise en combinaison avec la revendication 10, **caractérisée en ce que** chacune des deuxième (B2) et troisième (B3) bretelles comporte deux rainures opposées et alignées, sur son verso (13) une rainure (52) en forme de V et sur son recto (12) une rainure (50) en forme de trapèze.

## Patentansprüche

1. Genormte Karte (C) mit gedrucktem / gedruckten Kontakschaltkreis(en), umfassend einen durch zwei große Längsränder (18, 20) und zwei kleine vordere (22) und hintere (24) Querränder begrenzte Träger (10), der wenigstens einen elektronischen Mikroschaltkreis trägt und dessen Vorderseite (12) eine Serie (14) in der Nähe des vorderen (22) Querrandes der Karte(C) angeordneten Kontaktbereiche (16) umfasst und umfassend einen im Träger (10) gebildeten Schlitz (F) mit deutlich rechteckigem Rand um einen den Mikroschaltkreis und die Serie (14) Kontaktzonen (16) beinhaltenden Abschnitt zum Begrenzen einer herauslösbaren genormten Minikarte (MC), die mit dem Träger (10) der Karte (C) durch eine oder mehrere Verbindungen (B1, B2, B3) verbunden ist, die sich zwischen den inneren Rändern des Ausschnitts und den Rändern gegenüber (26, 28, 30, 32) erstrecken,
**dadurch gekennzeichnet, dass** wenigstens eine Verbindung zwei Typen einander gegenüber liegender Rillen (50, 52) umfasst, wobei die eine (50) derart angepasst ist, dass sie gegen Rissbildungen im Verlauf von Flexions- / Verdrehungsbeanspruchungen gemäß der Norm ISO resistent ist und zwar in stärkerem Maße als die andere Rille (52), wobei letztere dennoch auch derart angepasst ist, dass ein Riss durch absichtlichen Druck der Hand auf die Minikarte ausgelöst wird.

2. Karte gemäß Anspruch 1, **dadurch gekennzeichnet, dass** sie drei Verbindungen (B1, B2, B3) zur Verbindung umfasst, von denen sich eine erste Verbindung (B1), die sich in Längsrichtung vom vorderen Querrand (30) der Minikarte (MC) anliegend zum vorderen Querrand (22) der Karte (C) erstreckt, deren Breite (L1) wenigstens gleich der Breite (L2) der Serie (14) der in der Nähe des vorderen Querrandes (30) der Minikarte (MC) angeordneten Kontaktbereiche (16) ist, und zweite (B2) und dritte (B3) gegenüber liegende Verbindungen, die sich jede quer eines Längsrandes (26, 28) der Minikarte (MC) erstrecken.

3. Karte gemäß einem der vorherigen Ansprüche, **dadurch gekennzeichnet, dass** die zweiten (B2) und dritten (B3) Verbindungen quer angeordnet sind und sich in der Nähe der Serie (14) der Kontaktbereiche (16) befinden.

4. Karte gemäß einem der vorherigen Ansprüche, **dadurch gekennzeichnet, dass** die zweiten (B2) und dritten (B3) fluchtgerade ausgerichteten Verbindungen sich ungefähr 17 mm vom besagten vorderen Querrand (30) der Minikarte (MC) befinden, von dem sich die erste Verbindung (B1) erstreckt.

5. Karte gemäß einem der vorherigen Ansprüche, **dadurch gekennzeichnet, dass** die Breite (L1) der ersten Verbindung (B1) ungefähr gleich 11 mm ist.

6. Karte gemäß einem der vorherigen Ansprüche, **dadurch gekennzeichnet, dass** die Breite (L3) der zweiten (B2) und dritten (B3) Verbindung ungefähr gleich 1,2 mm ist.

7. Karte gemäß einem der vorherigen Ansprüche, **dadurch gekennzeichnet, dass** jede der Verbindungen (B1, B2, B3) wenigstens auf ihrer Vorderseite (12) oder ihrer Rückseite (13) eine zum Rand der Minikarte (MC) parallele Rille (40, 42, 50, 52) hat, von der aus die Verbindung sich derart erstreckt, dass ein den Beginn eines Bruchs der Verbindung bildender Abschnitt verringerter Dicke gebildet wird.

8. Karte gemäß dem vorherigen Anspruch, **dadurch gekennzeichnet, dass** die erste Verbindung (B1) wenigstens auf ihrer Vorderseite (12) oder ihrer Rückseite (13) eine Rille (40, 42) umfasst, die im Querschnitt ein V-Profil aufweist, dessen einer zum Rand (30) der Minikarte (MC) anliegender Zweig (44, 46) sich senkrecht zur allgemeinen Ebene der Karte (C) erstreckt.

9. Karte gemäß dem vorherigen Anspruch, **dadurch gekennzeichnet, dass** die erste Verbindung (B1) zwei gegenüber liegende, identisch und auf der Vorderseite (12) und der Rückseite (13) fluchtgerade ausgerichtete Rillen (40, 42) umfasst.

10. Karte gemäß Anspruch 7 bis 9, **dadurch gekennzeichnet, dass** jede der zweiten (B2) und dritten (B3) Verbindungen wenigstens auf ihrer Vorderseite oder ihrer Rückseite eine Rille (52) umfasst, die im Querschnitt ein V-Profil aufweist, dessen einer dem Rand (28, 26) der Minikarte (MC) anliegender Zweig (54) sich senkrecht zur allgemeinen Ebene der Karte (C) erstreckt.

11. Karte gemäß Anspruch 7 bis 9, **dadurch gekennzeichnet, dass** jede der zweiten (B2) und dritten (B3) Verbindungen wenigstens auf ihrer Vorderseite oder ihrer Rückseite eine Rille (50) umfasst, die im Querschnitt ein Profil in deutlicher Trapezform aufweist, dessen eine zum Rand (28, 26) der Minikarte (MC) anliegende Seite (60) sich senkrecht zur allgemeinen Ebene der Karte (C) erstreckt und dessen kleine, zum Boden der Rille gehörende Basis (58) sich mit einer Neigung im Verhältnis zur allgemeinen Ebene der Karte (C) erstreckt.

12. Karte gemäß Anspruch 11, in Verbindung mit Anspruch 10, **dadurch gekennzeichnet, dass** jede der zweiten (B2) und dritten (B3) Verbindungen zwei gegenüber liegende und fluchtgerade ausgerichtete Rillen, auf ihrer Vorderseite (13) eine Rille (52) in V-Form und auf ihrer Rückseite (12) eine Rille (50) in Trapezform umfasst.

## Claims

1. A standard integrated-circuit card (C) with contact having a support (10) delimited by two large longitudinal edges (18, 20) and by two small front (22) and rear (24) transverse edges, which carries at least one electronic microcircuit and whose front face (12) has a series (14) of contact areas (16), arranged in the vicinity of the front transverse edge (22) of the card (C), and having a slot (F) with a substantially rectangular contour formed in the support (10), around a portion including the microcircuit and the series (14) of contact areas (16), in order to delimit a standard detachable minicard (MC) connected to the support (10) of the card (C) by one or more straps (B1, B2, B3), which extend between the internal edges of the cutout and the facing edges (26, 28, 30, 32),
**characterised in that** at least one strap has two types of groove (50, 52) facing each other, one of them (50) being formed so as to withstand the initiation of cracks during bending/twisting forces in accordance with the ISO standard, and this to a greater extent than the other groove (52), the latter however also being formed so as to initiate a crack by intentional manual pressure on the minicard.

2. A card according to Claim 1, **characterised in that** it has three connecting straps (B1, B2, B3) amongst which there is a first strap (B1) which extends longitudinally from the front transverse edge (30) of the minicard (MC) adjacent to the front transverse edge (22) of the card (C), whose width (L1) is at least equal to the width (L2) of the series (14) of contact areas (16) arranged in the vicinity of the front transverse edge (30) of the minicard (MC), and the second (B2) and third (B3) opposite straps which each extend transversely from a longitudinal edge (26, 28) of the minicard (MC).

3. A card according to one of the preceding claims, **characterised in that** the second (B2) and third (B3) straps are aligned transversely and are situated close to the series (14) of contact areas (16).

4. A card according to one of the preceding claims, **characterised in that** the second (B2) and third (B3) aligned straps are situated at approximately 17 mm from the said front transverse edge (30) of the minicard (MC) from which the first strap (B1) extends.

5. A card according to any one of the preceding claims, **characterised in that** the width (L1) of the first (B1) strap is approximately 11 mm.

6. A card according to any one of the preceding claims, **characterised in that** the width (L3) of the second (B2) and third (B3) straps is approximately 1.2 mm.

7. A card according to any one of the preceding claims, **characterised in that** each of the straps (B1, B2, B3) has, at least on its front face (12) or reverse face (13), a groove (40, 42, 50, 52) parallel to the edge of the minicard (MC) from which the strap extends so as to constitute a portion of reduced thickness constituting an incipient break of the strap.

8. A card according to the preceding claim, **characterised in that** the first strap (B1) has, at least on its front face (12) or reverse face (13), a groove (40, 42) which, in cross-section, has a V-shaped profile, one arm (44, 46) of which, adjacent to the edge (30) of the minicard (MC), extends perpendicular to the overall plane of the card (C).

9. A card according to the preceding claim, **characterised in that** the first strap (B1) has two opposite identical and aligned grooves (40, 42) formed in the front face (12) and reverse face (13).

10. A card according to any one of Claims 7 to 9, **characterised in that** each of the second (B2) and third (B3) straps has, at least on its front face or reverse face, a groove (52) which, in cross-section, has a V-shaped profile, one arm (54) of which, adjacent to the edge (28, 26) of the minicard (MC), extends perpendicular to the overall plane of the card (C).

11. A card according to any one of Claims 7 to 9, **characterised in that** each of the second (B2) and third (B3) straps has, at least on its front face or reverse face, a groove (50) which, in cross-section, has a profile substantially in the form of a trapezium, one side (60) of which, adjacent to the edge (28, 26) of the minicard (MC), extends perpendicular to the overall plane of the card (C), and the small base (58) of which, belonging to the bottom of the groove, extends with an inclination with respect to the overall plane of the card (C).

12. A card according to Claim 11 taken in combination with Claim 10, **characterised in that** each of the second (B2) and third (B3) straps has two opposite and aligned grooves, on its reverse face (13) a groove (52) in the form of a V and on its front face (12) a groove (50) in the form of a trapezium.
